(19) Europäisches Patentamt
European Patent Office
Office européen des brevets

(11) Publication number : **0 537 177 B1**

# (12) EUROPEAN PATENT SPECIFICATION

(45) Date of publication of patent specification : **23.03.94 Bulletin 94/12**

(51) Int. Cl.$^5$ : **C07F 1/00,** A61K 31/28, A01N 55/02

(21) Application number : **91909959.8**

(22) Date of filing : **06.06.91**

(86) International application number : **PCT/BE91/00036**

(87) International publication number : **WO 91/19720 26.12.91 Gazette 91/29**

## (54) NITROGEN AND SILVER CONTAINING DERIVATIVE.

(30) Priority : **18.06.90 BE 9000616**

(43) Date of publication of application : **21.04.93 Bulletin 93/16**

(45) Publication of the grant of the patent : **23.03.94 Bulletin 94/12**

(84) Designated Contracting States : **DE FR GB NL**

(56) References cited :
**US-A- 3 830 824**
**US-A- 3 911 115**
**US-A- 3 979 382**
**US-A- 4 177 199**

(56) References cited :
**CANADIAN JOURNAL OF CHEMISTRY, vol. 66, No. 1, January 1988, J-Y. HUOT et al.: "The electrochemical oxidation of silver and tetraethylammonium salts of formamides and imides. N,N-coupling of formanilidyl radicls", pages 35-44, see the whole article.**

(73) Proprietor : **SOLLIE, Philippe**
**Vrijheidstraat 27**
**B-2000 Antwerpen (BE)**

(72) Inventor : **SOLLIE, Philippe**
**Vrijheidstraat 27**
**B-2000 Antwerpen (BE)**

(74) Representative : **Callewaert, Jean**
**Bureau Callewaert b.v.b.a. Brusselse steenweg 108**
**B-3090 Overijse (BE)**

EP 0 537 177 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a new pharmaceutical product with an active compound of a nitrogen and silver containing derivative having very specific pharmacological properties.

It concerns more particularly a product which at the same time combine an unusually long-lasting or strong local analgesic or local anaesthetic action with an extraordinary micro-organism killing activity, having few irritating or sensitizing properties and a small toxicity.

Therefore, the product, according to the invention, is useful as local analgesic and anaesthetic agent, on the one hand, and as a disinfectant, on the other hand.

When attending to open wounds a microorganism killing property is important. On the other hand, many open wounds are very painful, in particular at the time of bandage renewal.

The aim of the above mentioned invention is to present a pharmaceutical product containing an active compound with little solubility in water, which slowly dissociates simultaneously to, on the one hand, an active micro-organism killing ion (Ag+) and, on the other hand, an active local analgesic product.

This compound is known from the publication Can. J. Chem. Vol. 66, 1988, pages 35-43, but no mention has been made of any pharmaceutical use of this compound. Moreover, publication Can. J. Chem. Vol. 61, 1983, pages 1890-1898, refers to the preparation of such compound, but also no mention at all has been made of the use of this compound as a medecine.

The pharmaceutical product, according to the invention, is characterized in that it comprises at least an active compound of a nitrogen and silver containing derivative in which a substituted or not substituted aliphatic or aromatic group is attached via a carbonyl group possibly followed by at least one carbon atom and/or aromatic or aliphatic ring, to an amino group or a heterocyclic nitrogen containing ring structure, with at least one silver atom being attached directly to at least one nitrogen atom, as well as the complexes of this derivative formed via the silver atom.

Efficiently, the aromatic radical is attached via an amide or ester bond and possibly followed by one or two successive carbon atoms to a secondary or tertiary amino group or a heterocyclic nitrogen containing ring structure, with at least one silver atom being attached directly to at least one nitrogen atom, as well as the complexes of this derivative formed via the silver atom.

In a particular embodiment of the invention the concerned derivative corresponds to the following general structure:

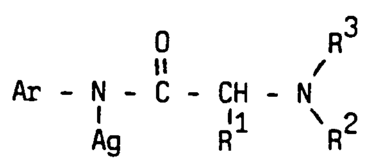

(I)

or

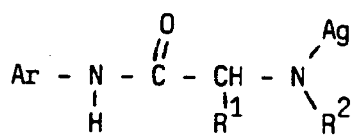

(II)

wherein Ar represents an aromatic group, such as a substituted or not substituted phenyl or naphtyl group, $R^1$ represents hydrogen or a ($C_1$-$C_4$) alkyl, alkenyl or alkynyl group and $R^4$ and $R^3$ represent a ($C_1$-$C_4$) alkyl, alkenyl, alkynyl, hexyl or tetramethylene group, the total number of carbon atoms in $R^1$, $R^2$ and $R^3$ being at least 4, as well as the complexes, more particularly dimer, of this derivative formed via the silver atom.

The invention relates also to a pharmaceutical. product with as an active component a nitrogen and silver containing derivative, such as defined hereabove.

Further the invention relates also to the use of this derivative for obtaining a micro-organism killing and analgesic medicine.

Finally protection is claimed for a particular method for preparing the hereabove defined nitrogen and silver containing derivative, which is characterized in that a compound with general formula RR'HN is caused to react with $AgNO_3$ and NaOH to form a complex with following structure RR'N-Ag-Ag-NR'R, which precipitates and is separated from the remaining reaction products in dissolved state, with the meaning of R and R' being determined by the desired structure of the nitrogen and silver containing derivative to be prepared.

Other details and advantages of the invention will become apparent in the description following hereafter in which a.o. examples are given of the preparation of some specific compounds according to the invention. This description is only provided as an illustration or clarification of the invention and hence does by no means limit the scope of it.

In general the invention relates to a new nitrogen and silver containing derivative, which comprises complexes formed via the silver atom, as well as racemic mixtures, and in which a substituted or not substituted aliphatic or aromatic group is attached via a carbonyl group, possibly followed by at least one carbon atom and/or aromatic or aliphatic ring, to an amino group or a heterocyclic nitrogen containing ring structure, with at least one silver atom being attached directly to at least one nitrogen atom.

It was found that compounds with such a structure usually show at the same time long-lasting and/or strong local anaesthetic action and an extraordinary micro-organism killing activity, having few irritating or sensitizing properties and a small acute toxicity.

As mentioned already hereabove compounds are concerned here which are little soluble in water and dissociate slowly to at the same time, on the one hand, an active micro-organism killing Ag-ion and, on the other hand, an active local analgesic agent.

Furthermore because of the low solubility a deposit of undissolved product is formed. This will dissolve gradually because of the fact that the dissolved and dissociated products are carried off. Dissolving and dissociating occur slowly. In such a way, in function of time and the product used, during a longer period a constant and continuous supply of micro-organims killing and analgesic agent is available (so-called "deposit" or "retard" effect).

This is of the utmost importance for the patient. It guarantees a safe and comfortable healing of an inflamed or not inflamed wound.

An additional advantage of silver compounds in general and more particularly of the ones according to the invention is their limited stability in the presence of light and/or of other ions. Because of this the dissociation will go on more efficiently. Particularly in combination with $Ce(N0_3)_3$ dissociation would be influenced positively without any disadvantageous effect on the toxicity.

Amide compounds corresponding to this general formulation appeared to have interesting properties. In this respect it was e.g. found that they have very low sensitizing properties. Thus amide compounds corresponding to the following general structure are of importance:

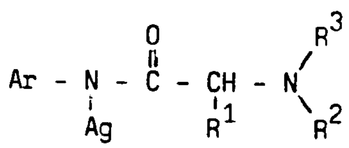

(I)

or

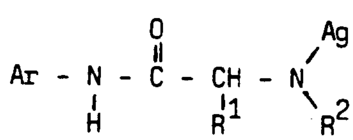

(II)

wherein Ar represents an aromatic group, such as a substituted or not substituted phenyl or naphtyl group, $R^1$ represents hydrogen or a ($C_1$-$C_4$) alkyl, alkenyl or alkynyl group and $R^2$ and $R^3$ represent a ($C_1$-$C_4$) alkyl, alkenyl, alkynyl, hexyl or tetramethylene group with the total number of carbon atoms in $R^1$, $R^2$ and $R^3$ being at least 4, as well as the complexes more particularly dimer, of this derivative formed via the silver atom.

This concerns here a.o. following specific amide compounds: N-Ag articaine, N-Ag butanilicaine, N-Ag tolicaine, N-Ag etidocaine and N-Ag lidocaine.

Furthermore cyclic N-N-Ag acylxylidides appear also of importance for the application described hereabove. These correspond to the following general structure:

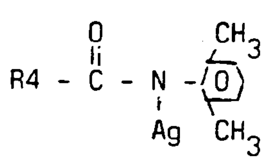

(V)

wherein $R^4$ represents a

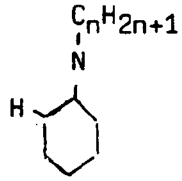

or $-CH_2$-N group, in which n varies from 1 to 4, as well as the complexes of this derivative, particularly dimer, formed via the silver atom. The N-Ag bupivacaine is a.o. concerned here, the N-Ag-pyrrocaine and the N-Ag mepivacaine. Also N-Ag-cinchocaine with the structure mentioned below has, for the application intended, interesting properties:

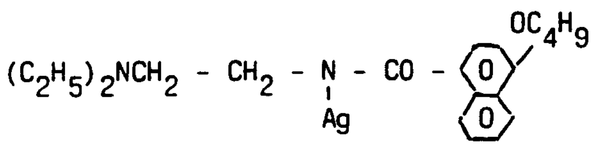

as well as the complexes, more particularly dimer, of this derivative formed via the silver atom.

Another important group contains the ester compounds which correspond a.o. to one of the following basic structures:

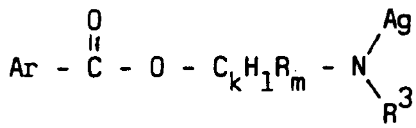

(III)

or

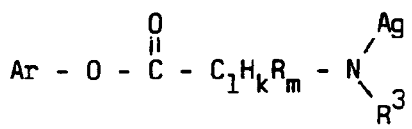

(IV)

wherein Ar represents an aromatic group, such as a substituted or not substituted phenyl or naphtyl group, $R^3$ represents a ($C_1$-$C_4$) alkyl, alkenyl, alkynyl, hexyl or tetramethylene radical and k is 2 or 3, 1 varies from 2 to 6 and m varies between 0 and 4, as well as the complexes of the derivative, particularly dimer, formed via the silver atom.

Examples of such compounds are N-Ag-hexylcaine, N-Ag benzocaine, N-Ag-butylamino-benzoate, N-Ag-butacaine, N-Ag oxy-buprocaine and N-Ag-procaine.

The amide compounds can be prepared according to the following reaction plan:

$$2\ RR'NH + 2\ AgNO_3 + 2\ NaOH \rightarrow RR'N\text{-}Ag\text{-}Ag\text{-}NR'R + 2\ NaNO_3 + 2\ H_2O$$

The silver compound precipitates, can be removed by filtration and purified if necessary. The racemic compounds can be separated in a well-known manner (with use of optically active tartaric acid).

The nitrogen and silver containing derivative, according to the invention, can be administered in several different ways. Parenteral solutions can be administered peridurally by infiltration, subarachnoidally, intra-arterially or intravenously. Gels, ointments, sprays or dusting powders which can be composed of the base or a pharmaceutically tolerable salt thereof, can be applied locally on the mucosa or on an injured or not injured open or grazed skin.

Depending on the product used concentrations of 0,05 to 100% (i.e. as dusting powder) can be used. Limitations will occur depending on the product used. Thus N-Ag lidocaine can safely be administered to adults locally up to 2.5 g a time. For N-Ag tetracaine this limit is 1 g.

Finally, hereafter some specific examples are given of the preparation of some nitrogen and silver containing derivatives, according to the invention.

Example 1

N-Argentum-1-butyl-piperdine-2-(2.6-dimethyl-carboxanilide) 28.84 g 1-butyl-piperdine-2-(2.6-dimethylcarboxanilide) and 16.98 g $AgNO_3$ are dissolved in 200 ml 50% ethanol. It is heated to boiling and then an equimolar quantity of 1 to 5 M NaOH is added in drops. The precipitate created is removed by filtration and washed with 95% ethanol and afterwards with ether. The precipitate is dried in the dark over $P_2O_5$ in a vacuumexicator. A greyish solid substance is obtained which decomposes at 320°C.
Yield 85% (0.085 mol).

Calculated for $AgC_{18}H_{27}N_2O$:
C 54.8; H 6.8; N 7.1; O 4.0; Ag 27.4
Found: C 54.4; H 6.9; N 6.9; O 3.9; Ag 27.2

Example 2

N-Argentum-2butoxy-N-(2-diethylamino-ethyl)chinoline-4-carboxamide To 50.15 g 2-butoxy-N-(diethylamino-ethyl)-chinoline-4-carboxiamide dissolved in 600 ml pure ethanol a solution of 24.80 g $AgNO_3$ in 100 ml DMSO is added. Next, hereto is added in drops 365 ml of a 0.4 N ethanolic NaOH solution with intense stirring over a period of 2 hours. The pale grey precipitate is removed by filtration and thoroughly washed with pure ethanol, afterwards with acetone. The powder is dried in a vacuumdessicator (20 mm) for 48 hours. Yield 91% (0.133 mol). The product decomposes at 208°C.

Calculated for $AgC_{26}H_{29}H_3O_2$:
C 53.3; H 6.4; N 9.3; O 7.1; Ag 24
Found: C 53.6; H 5.9; N 8.9; O 7.0; Ag 24.2

Example 3

N-Argentum-2-(ethyl-propyl-amino)-2'.6'-butyro-xylidine To 62.19 g 2-(ethyl-propyl-amino)-2'.6'-butyroxylidine-xylidine dissolved in 800 ml pure ethanol, a solution of 38.22 g $AgNO_3$ in 250 ml DMSO is added. Next hereto with intense stirring, 560 ml of a solution of 0.4 N ethanolic NaOH solution is added in drops over a period of 4 hours. The grey precipitate is removed by filtration and thoroughly washed with pure ethanol, afterwards with acetone. The powder is dried in a vacuumdessicator (20 mm) for 48 hours. Yield 89% (0.200 mol). The product decomposes above 278°C.

Calculated for $AgC_{17}H_{28}N_2O$:
C 53.1; H 7.3; N 7.30; O 4.2; Ag 28.1
Found: C 53.4; H 6.9; N 7.10; O 3.9; Ag 27.8

Example 4

N-Argentum-(α-propylamino-propio-o-toluidine) 38.55 g α-propylamino-propio-o-toluidine and 29.73 g $AgNO_3$ are dissolved in 500 ml 50% ethanol. It is heated to boiling and then an equimolar quiantity 1 to 5 M NaOH is added slowly in drops. The precipitate obtained is removed by filtration and washed with 95% ethanol and afterwards with ether. The precipitate is dried in the dark over $P_2O_5$ in a vacuumexicator. A greyish solid substance is obtained which decomposes at 278°C. Yield 81% (0.142 mol).

Calculated for $AgC_{13}H_{20}N_2O$:
C 47.6; G 6.1; N 8.5; O 4.8; Ag 32.9
Found: C 47.2; H 6.5; N 8.8; O 4.6; Ag 32.7

Example 5

N-Argentum-N-(2.6-dimethylbenzyl)-1.NN diethylacetamide

Method A

57.41 g N-(2.6 dimethylbenzyl)-1.NN diethylacetamide and 41.62 g $AgNO_3$ are dissolved in 600 ml 50% ethanol. It is heated to boiling and then an equimolar quantity of 1 to 5 M NaOH is added slowly in drops. The obtained precipitate is removed by filtration and washed with 95% ethanol and afterwards with ether. The precipitate is dried in the dark over $P_2O_5$ in a vacuumexicator. A greyish solid substance is obtained which decomposes at 315°C. Yield 86% (0.211 mol).

Calculated for $AgC_{14}H_{22}N_2O$:
C 49.1; H 6.4; N 8.1; O 4.7; Ag 31.5
Found: C 49.5; H 6.1; N 8.6; O 4.9; Ag 31.5

Method B

To 78.03 g N-(2.6 dimethylbenzyl)-1.NN diethylacetamide, dissolved in 950 ml pure ethanol, a solution of 56.56 g $AgNO_3$ in 400 ml DMSO is added. Next, hereto is added in drops, with intense stirring, 832 ml of a 0.4 N ethanol NaOH solution over a period of 8 hours. The grey precipitate is removed by filtration and washed thoroughly with pure ethanol, afterwards with acetone. The powder is dried in a vacuumdessicator (20 mm) for 68 hours. Yield 93% (0.310 mol). The greyish product decomposes at 315°C.

Calculated for $AgC_{14}N_{22}N_2O$:
C 49.1; H 6.4; N 8.1; O 4.7; Ag 31.5
Found: C 49.9; H 9.6; N 7.9; O 4.6; Ag 30.7

Example 6

(N-Argentum-4-butylaminobenzoic acid)-2-dimethylamino-ethylester 52.88 g (4-butylaminobenzoic acid)-2-dimethylamino-ethylester and 34.0 g $AgNO_3$ are dissolved in 600 ml 50% ethanol. It is heated to boiling and then an equimolar quantity of 1 to 5 M NaOH is added slowly in drops. The obtained precipitate is removed by filtration and washed with 95% ethanol and afterwards with ether. The precipitate is dried in the dark over $P_2O_5$ in a vacuumexicator. A greyish substance is obtained which decomposes at 315°C. Yield 50% (0.12 mol).

Calculated for $AgC_{15}H_{24}N_2O_2$:
C 48.4; H 6.4; N 7.5 O 8.6; Ag 29.0
Found: C 48.1; H 6.0; N 7.1, O 8.9; Ag 28.6

Finally hereafter some possible galenical forms are given under which the derivative can be used as a medicine according to the invention:

1. Sterile suspension

| | |
|---|---|
| N-Argentum-1-butyl-piperdine-2(2,-dimethylcarboxanilide) | 3 g |
| Aqua pro injectione ad | 100 g |

2. O/W cream

| | |
|---|---|
| N-Argentum-2-butoxy-N-2-diethylamino-ethyl)-chinoline-4-caroxamide | 1 g |
| White Vaseline | 30 g |
| Tween 20 | 5 g |
| Aqua distillata ad | 100 g |

3. W/O cream

| | |
|---|---|
| N-Argentum-2-(ethyl-propyl-amino)-2'.6'-butyro-xylidine | 10 g |
| White Vaseline | 30 g |
| Sorbitansesquioleate | 6 g |
| Aqua distillata ad | 100 g |

4. Powder

| | |
|---|---|
| N-Argentum-(-propylanino-propio-o-toluidine) | 30 to 70 % |
| Lactose 100 Mesh | 70 to 30 % |

a) in a sifter.
b) by means of a known technology in a freon-free sprayer (so-called "powder-spray").
c) in a plaster or double bandage, in a separate compartment, the powder being released by removing a protecting folio or through contact with the wound or skin. The plaster will protect against external contamination, the product will fight the existing internal contamination.

5. Pasta

| | |
|---|---|
| N-Argentum-N-(2.6-dimethylbenzyl)-1-NN-disthyl-acetamide | 18 % |
| Lassarpasta Belgian Pharmacopee IV ad | 100 g |

## Claims

1. Pharmaceutical product with an active compound of nitrogen and silver containing derivative in which a substituted or not substituted aliphatic or aromatic group is attached via a carbonyl group, possibly followed by at least one carbon atom and/or aromatic or aliphatic ring, to an amino group or a heterocyclic nitrogen containing ring structure, with at least one silver atom being attached directly to at least one nitrogen atom,

as well as the complexes of this derivative formed via the silver atom.

2. Product according to claim 1, characterized in that the aromatic group is attached via an amide or ester bond and possibly followed by one or two successive carbon atoms to a secondary or tertiary amino group or a heterocyclic nitrogen containing structure, with at least one silver atom being attached directly to at least one nitrogen atom, as well as the complexes of this derivative formed via the silver atom.

3. Product according to claim 1 or 2, characterized in that the derivative corresponds to the following general structure

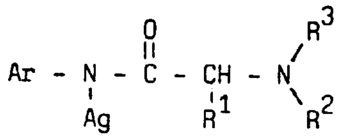

(I)

or

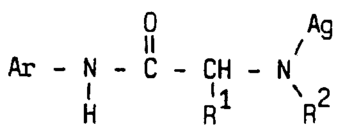

(II)

wherein Ar represents an aromatic group, such as a substituted or not substituted phenyl or naphtyl group, $R^1$ represents hydrogen or a ($C_1$-$C_4$) alkyl, alkenyl or alkynyl group and $R^2$ and $R^3$ represent hydrogen or a ($C_1$-$C_4$) alkyl, alkenyl, alkynyl, hexyl or tetra-methylene group, the total amount of carbon atoms in $R^1$, $R^2$ and $R^3$ being at least 4, as well as the complexes, in particular dimer, of this derivative formed via the silver atom.

4. Product according to claim 1 or 2, characterized in that the derivative corresponds to the following general structure :

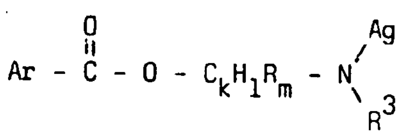

(III)

or

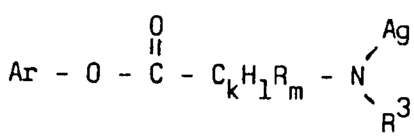

(IV)

wherein Ar represents an aromatic group, such as a substituted or not substituted phenyl or naphtyl group, $R^3$ represents a ($C_1$-$C_4$) alkyl, alkenyl, alkynyl-hexyl- or tetramethylene group, and k being 2 or 3, l varies from 2 to 6 and m varies from 0 to 4, as well as the complexes, in particular dimer, of this derivative formed via the silver atom.

5. Product according to claim 1 or 2, characterized in that the derivative is formed by an N-Ag-acylxylide with the following general structure:

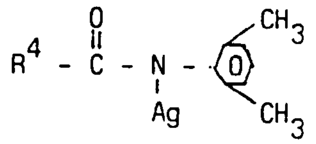 (V)

wherein $R^4$ represents an

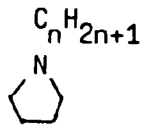

or

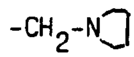

group, in which n varies from 1 to 4, as well as the complexes, in particular dimer, of the derivative formed via the silver atom.

6. Product according to claim 1 or 2, characterized in that the derivative is formed by the N-Ag cinchocaine with following structure:

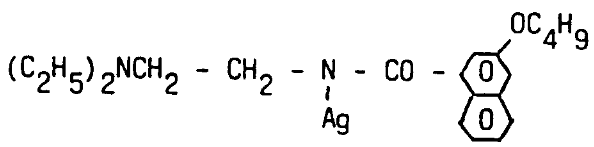 (VI)

as well as the complexes, particularly dimer, of this derivative formed via the silver atom.

7. Product according to claim 1, characterized in that the derivative corresponds to the following general structure :

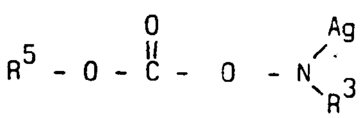 (VII)

wherein $R^5$ represents a ($C_2$-$C_4$) alkyl group substituted or not substituted by $N(C_2H_5)_2$, as well as the complexes of this derivative formed via the silver atom, particularly dimer.

8. Use of nitrogen and silver containing derivative according to any one of the preceeding claims for obtaining a micro organism killing and analgesic medicine.

## Patentansprüche

1. Pharmazeutisches Produkt mit einer wirksamen Verbindung aus einem Sticketoff und Silber enthaltenden Derivat, in welchem eine substituierte oder nicht substituierte aliphatische oder aromatische Gruppe über eine Carbonylgruppe, möglicherweise gefolgt von mindestens einem Kohlenstoffatom und/oder aromatischen oder aliphatischen Ring, an eine Aminogruppe oder eine heterocyclischen Stickstoff enthaltende Ringstruktur gebunden ist, wobei mindestens ein Silberatom direkt an mindestens ein Stickstoffatom gebunden ist, sowie die Komplexe dieses Derivats, die über das Silberatom gebildet sind.

2. Produkt nach Anspruch 1, **dadurch gekennzeichnet,** daß die aromatische Gruppe über eine Amid- oder Esterbindung und möglicherweise gefolgt von einem oder zwei aufeinanderfolgenden Kohlenstoffatomen

an eine sekundäre oder tertiäre Aminogruppe oder eine heterocyclischen Stickstoff enthaltende Struktur gebunden ist, wobei mindestens ein Silberatom direkt an mindestens ein Stickstoffatom gebunden ist, sowie die Komplexe dieses Derivats, die über das Silberatom gebildet sind.

3. Produkt nach Anspruch 1 oder 2, **dadurch gekennzeichnet**, daß das Derivat der folgenden allgemeinen Struktur entspricht

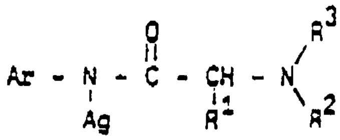

(I)

oder

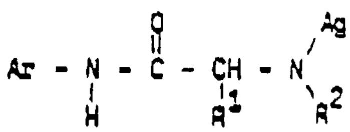

(II)

worin Ar eine aromatische Gruppe, wie eine substituierte oder nicht substituierte Phenyl- oder Naphthylgruppe bedeutet, $R^1$ Wasserstoff oder eine ($C_1$-$C_4$)-Alkyl-, Alkenyl- oder Alkynylgruppe bedeutet und $R^2$ und $R^3$ Wasserstoff oder eine ($C_1$-$C_4$)-Alkyl-, Alkenyl-, Alkynyl-, Hexyl- oder Tetramethylengruppe bedeuten, wobei die gesamte Anzahl der Kohlenstoffatome in $R^1$, $R^2$ und $R^3$ mindestens 4 ist, sowie die Komplexe, insbesondere dimere, dieses Derivats, die über das Silberatom gebildet sind,

4. Produkt nach Anspruch 1 oder 2, **dadurch gekennzeichnet,** daß das Derivat der folgenden allgemeinen Struktur entspricht:

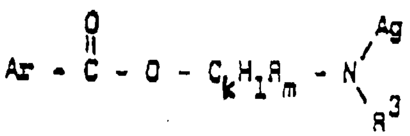

(III)

oder

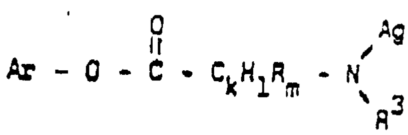

(IV)

worin Ar eine aromatische Gruppe, wie eine substituierte oder nicht substituierte Phenyl- oder Naphthylgruppe bedeutet, $R^3$ eine ($C_1$-$C_4$)-Alkyl-, Alkenyl-, Alkynyl-Hexyl- oder Tetramethylengruppe bedeutet und k 2 oder 3 ist, 1 von 2 bis 6 und m von 0 bis 4 variiert, sowie die Komplexe, insbesondere dimere, dieses Derivats, die über das Silberatom gebildet sind.

5. Produkt nach Anspruch 1 oder 2, **dadurch gekennzeichnet,** daß das Derivat durch ein N-Ag-Acylxylid mit der folgenden allgemeinen Struktur gebildet ist:

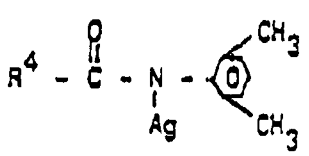

(V)

worin $R^4$ eine

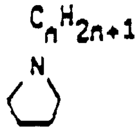

oder

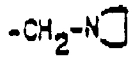 -Gruppe

bedeutet, in welcher n von 1 bis 4 variiert, sowie die Komplexe, insbesondere dimere, des Derivats, die über das Silberatom gebildet sind.

6. Produkt nach Anspruch 1 oder 2, **dadurch gekennzeichnet**, daß das Derivat durch das N-Ag-Cinchocain mit der folgenden Struktur gebildet ist:

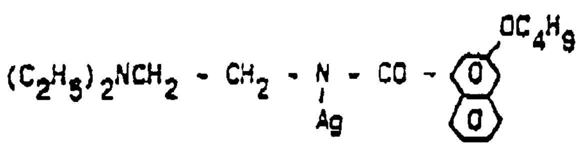

(VI)

sowie die Komplexe, insbesondere dimere, dieses Derivats, die über das Silberatom gebildet sind.

7. Produkt nach Anspruch 1, **dadurch gekennzeichnet,** daß das Derivat der folgenden allgemeinen Struktur entspricht:

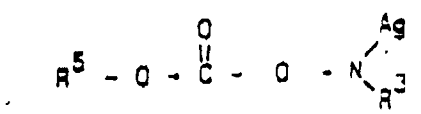

(VII)

worin $R^5$ eine ($C_2$-$C_4$)-Alkylgruppe, die durch $N(C_2H_5)_2$ substituiert oder nicht substituiert ist, bedeutet, sowie die Komplexe dieses Derivats, die über das Silber- atom gebildet sind, insbesondere dimere.

8. Verwendung eines Stickstoff und Silber enthaltenden Derivats nach einem der vorhergehenden Ansprüche zum Herstellen eines Mikroorganismen tötenden und schmerzstillenden Arzneimittels.

## Revendications

1. Produit pharmaceutique avec un composé actif d'un dérivé contenant de l'azote et de l'argent dans lequel un groupe aromatique ou aliphatique substitué ou non est attaché via un groupe carbonyle, éventuellement suivi par au moins un atome de carbone et/ou un noyau aliphatique ou aromatique, à un groupe amino ou une structure cyclique contenant un azote hétérocyclique, avec au moins un atome d'argent attaché directement à au moins un atome d'azote ainsi que les complexes de ce dérivé formés via l'atome d'argent.

2. Produit suivant la revendication 1, caractérisé en ce que le groupe aromatique est attaché via un lien amide ou ester et éventuellement suivi par un ou deux atomes de carbone successifs à un groupe amino secondaire ou tertiaire ou une structure contenant de l'azote hétérocyclique, avec au moins un atome d'argent attaché directement à au moins un atome d'azote ainsi que les complexes de ce dérivé formés via l'atome

d'argent.

3. Produit suivant la revendication 1 ou 2, caractérisé en ce que le dérivé correspond à la structure générale suivante :

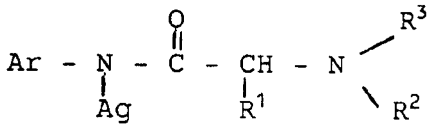

(I)

ou

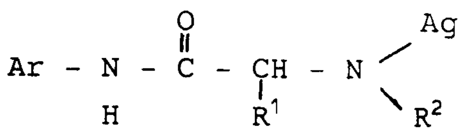

(II)

dans laquelle Ar un groupe aromatique, tel qu'un groupe naphtyle ou phényle substitué ou non , $R^1$ représente de l'hydrogène ou groupe $(C_1\text{-}C_4)$alkyle, alkenyle ou alkynyle et $R^2$ et $R^3$ représentent de l'hydrogène ou un groupe $(C_1\text{-}C_4)$alkyle, alkenyle, alkynyle, hexyle ou tetraméthylène, le nombre total d'atomes de carbone en $R^1$, $R^2$ et $R^3$ étant au moins de 4, ainsi que les complexes en particulier les dimères, du dérivé formé via l'atome d'argent.

4. Produit suivant la revendication 1 ou 2, caractérisé en ce que le dérivé correspond à la structure générale suivante :

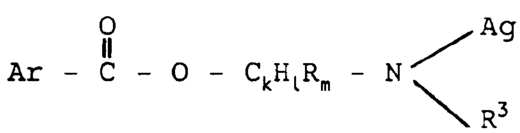

(III)

ou

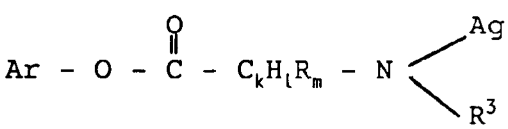

(IV)

dans lesquelles Ar représente un groupe aromatique, tel qu'un groupe naphtyle ou phényle substitué ou non, $R^3$ représente un groupe $(C_1\text{-}C_4)$alkyle, alkényle, alkynylehexyle- ou tétraméthylène, et K étant 2 ou 3, l variant de 2 à 6 et m variant de O à 4, ainsi que les complexes, en particulier les dimères, de ce dérivé formé via l'atome d'argent.

5. Produit suivant la revendication 1 ou 2, caractérisé en ce que le dérivé est formé par un N-Ag-acylxylide avec la formule générale suivante :

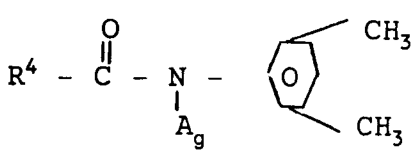

(V)

dans laquelles $R^4$ représente un groupe

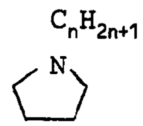

ou un groupe

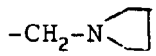 ,

dans laquelle n varie de 1 à 4, ainsi que les complexes, en particulier dimères, du dérivé formé via l'atome d'argent.

**6.** Produit suivant la revendication 1 ou 2, caractérisé en ce que le dérivé est formé par un N-Ag cinchocaine avec la structure suivante :

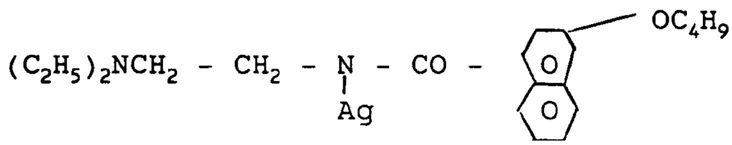 (VI)

ainsi que les complexes, en particulier dimère, de ce dérivé formé via l'atome d'argent.

**7.** Produit suivant la revendication 1, caractérisé en ce que le dérivé correspond à la structure générale suivante :

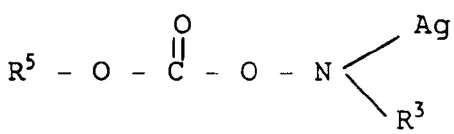 (VII)

dans laquelle $R^5$ représente un groupe ($C_2$-$C_4$)alkyle substitué ou non par $N(C_2H_5)_2$, ainsi que les complexes de ce dérivé formé via l'atome d'argent, en particulier le dimère.

**8.** Utilisation du dérivé contenant de l'azote et de l'argent suivant l'une quelconque des revendications précédentes pour obtenir un médicament analgésique et détruisant des micro-organismes.